# EUROPEAN PATENT APPLICATION

(11) **EP 4 721 945 A1**
(43) Date of publication of application: **08.04.2026**
(21) Application number: 25205600.7
(22) Date of filing: 30.09.2025
(51) Int. Cl.: B29C 33/30, B29C 33/42, B29C 70/30, B29C 70/68, B29D 99/00, F03D 1/06

(54) **METHOD OF MANUFACTURING A HALF SHELL OF A WIND TURBINE ROTOR BLADE**

(30) Priority: 03.10.2024 IN 202441074822
(71) Applicant: Nordex Energy SE & Co. KG, 22419 Hamburg (DE)
(72) Inventor: Ramachandran, Anbarasan, 560001 Bangalore (IN); Udupi, Aravind, 560001 Bangalore (IN)
(74) Representative: Epping - Hermann - Fischer

(57) **Abstract**

The invention relates to a method of manufacturing a half shell (132) of a wind turbine rotor blade,
using a mould (141) which comprises a layup surface (142) and a protrusion (143), wherein the protrusion (143) defines an edge of the mould (141),
comprising the steps of:
i. arranging a block (149) of sacrificial material on the protrusion (143),
ii. arranging a plurality of laminate layers (145, 146, 147) on the layup surface (142), wherein at least one laminate layer (145, 146) of the plurality of laminate layers (145, 146, 147) covers the block (149) of sacrificial material on the protrusion (143),
iii. removing the block (149) of sacrificial material and the part of the at least one laminate layer (145, 146) covering the block (149) of sacrificial material.

## Description

The invention concerns a method of manufacturing a half shell of a wind turbine rotor blade.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the blade to the rotor hub. The wind turbine rotor blade extends from the root to a tip. Typically, two half shells are produced, which are placed on top of each other after their respective manufacture and bonded together to produce the wind turbine rotor blade. The half shells themselves may be segmented for manufacturing a so-called split blade or segmented blade.

Half shells of a wind turbine rotor blade are commonly manufactured in a mould. The components of the half shell are subsequently stacked in the mould. In order to manufacture the half shell with a high precision, it is necessary to avoid slippage of the components. Especially in the root area, where the layup surface of the mould is steeply rising, it is crucial to prevent the laminate layers used to manufacture the half shell unintentionally from moving relative to each other or relative to the layup surface before being infused by a resin. For that reason, the laminate layers are laid over the edge of the mould and fastened to it.

It is state of the art to remove the parts of the laminate layers of the half shell protruding over the edges of the mould and form a massive block after infusion hardening of the resin, by a manual grinding operation. The parts may partly be removed by slicing. A cut made with a slicer has to be positioned sufficiently far away from an edge of the mould to prevent damaging the mould. Thus, after slicing, a time-consuming manual grinding operation remains necessary.

It is an object of the invention to provide an improved method of manufacturing a half shell of a wind turbine rotor blade.

This object is achieved by the independent claim. Advantageous embodiments are given in the sub-claims.

A method of manufacturing a half shell of a wind turbine rotor blade is disclosed in which a mould is used. The mould comprises a layup surface and a protrusion. The protrusion defines an edge of the mould. The method comprises the steps of:
i. arranging a block of sacrificial material on the protrusion,
ii. arranging a plurality of laminate layers on the layup surface, wherein at least one laminate layer of the plurality of laminate layers covers the block of sacrificial material on the protrusion,
iii. removing the block of sacrificial material and the part of the at least one laminate layer covering the block of sacrificial material.

The block of sacrificial material may be removed from the half shell completely in step iii. After completion of the method of manufacturing, the half shell may not comprise any material from the block of sacrificial material.

By providing the block of sacrificial material in step i., it may be enabled to make a cut with a slicer in step iii. The cut may be made parallel to the upper surface of the protrusion and very close to the protrusion. Thereby, most of the parts of the shell structure protruding beyond the edges of the mould can be removed in the slicing operation. Possibly, even the entire block may be removed in the slicing operation. Thus, the time for a manual grinding operation for removing protruding parts of the shell structure may be reduced significantly or the manual grinding operation may even be omitted completely. Thereby, a process time for manufacturing the half shell can be reduced.

Further, during a manual grinding operation, the formation of dust is inevitable, resulting in unpleasant working conditions and the need for precautionary measures such as respiratory protection of a worker. During slicing, hardly any dust is formed. Thus, as a grinding time is shortened or grinding may even by omitted completely due to the provision the block of sacrificial material, the formation of dust can be reduced or prevented.

More than one block of sacrificial material may be arranged on the protrusion in step i. For example, multiple blocks may be arranged adjacent to each other on the protrusion in a longitudinal direction of the mould. The blocks may cover the protrusion in a rotor blade root area of the mould completely. The blocks may cover the protrusion in a transition area of the mould partly or completely. The blocks may cover the protrusion in a profile area of the mould partly or completely.

The protrusion may define a trailing edge or a leading edge of the mould. The mould may comprise two protrusions, one defining the trailing edge and the other one defining the leading edge. In step i., at least one block of sacrificial material may be arranged on each of the two protrusions.

According to an embodiment, the at least one block protrudes inwardly over the protrusions. The at least one block may protrude inwardly over the protrusion in the rotor blade root area. The block protruding inwardly means that the block extends further towards the layup surface of the mould than the protrusion. In other words, a part of the block may overlap the layup surface. An end face of a root joint of the rotor blade may abuts a lower face of the block which protrudes over the protrusion during the manufacturing process. Thereby, a precision of the manufacturing process may be improved.

According to an embodiment, the method comprises the following step which is executed before step i.:
- arranging an outer layer of the half shell in the mould, wherein the outer layer is arranged on the layup surface and the protrusion, wherein the outer layer protrudes beyond the protrusion, and wherein the block of sacrificial material is arranged in step i. such that the outer layer is arranged between the protrusion and the block of sacrificial material. This contributes to an easy removal of the block of sacrificial material or of remaining parts of it. The outer layer may be fixed by the block and may be prevented from slipping into the mould. Thereby, a precision in manufacturing the half shell may be improved.

According to an embodiment, the block of sacrificial material is fixed to the protrusion and/or the outer layer of the half shell by an adhesive spray or by a double-sided adhesive tape in step i. Thus, any movements of the block relative to the mould can be prevented. This contributes to an easy manufacturing of the half shell and to an improved precision in the manufacturing.

According to an embodiment, the method comprises the following step which is executed after step ii. and before step iii.:
- infusing the outer layer, the block of sacrificial material and the plurality of laminate layers with a resin.

Before the resin infusion, a vacuum foil is applied which covers the block of sacrificial material and the plurality of laminate layers during the resin infusion and which is removed after the resin infusion.

According to an embodiment, the block of sacrificial material and the at least one laminate layer of the plurality of laminate layers are removed by slicing in step iii. The slicing may be followed by grinding.

Removing the block of sacrificial material in step iii. by slicing provides multiple advantages. Slicing results in a short process time. In particular, compared to removing a large part of the block by grinding, the process time can be accelerated if most of the block or even the entire block is removed by slicing.

Moreover, during a slicing operation, no dust or only a small amount of dust is formed. Thus, slicing results in more pleasant working conditions compared to grinding.

Slicing also enables to provide a smooth surface such that further trimming steps after the slicing operation may not be required.

According to one embodiment, the sacrificial material is a hardened foam material. For example, the sacrificial material may be polyvinylchloride (PVC) or polyethylene terephthalate (PET) .

According to one embodiment, the block of sacrificial material has a colour which differs from the colour of the mould and from the colour of the plurality of laminate layers. This may provide a visual indication for a position for a cut during the removal of the block in step iii. This visual indication may allow the worker to position the cut close to the protrusion such that most of the block or even the entire block can be removed in a slicing operation. This contributes to the above-mentioned functions and advantages of a reduced process time and the prevention of a formation of dust.

According to one embodiment, the half shell extends in a longitudinal direction from a root end to a tip end, wherein, in step i., the block of sacrificial material is arranged on the protrusion at the root end and extends along the protrusion in the longitudinal direction of the mould such that it covers at least a part of the protrusion. For example, the protrusion may be covered in a rotor blade root area. In the rotor blade root area, the layup surface of the mould is steep such that it is particular important to prevent slipping of the components of the half shell. The addition of the block may support to prevent the laminate layers from sliding into the mould when laminate layers are fixed to the edge of the mould.

According to one embodiment, the block of sacrificial material has a cross-section having a triangular or trapezoidal, in particular rectangular, or rounded shape. In principle, the shape of the block of sacrificial material shall not be limited. However, it may be preferred to adapt the shape of the block to the shape of the mould. For example, the lower face of the block may have a shape matching to the shape of the protrusion and possibly also to the shape of a step adjacent to the protrusion. Thereby, it may be facilitated to fix the block on the protrusion. Moreover, the shape of an inner edge the block may be adapted to the shape of the layup surface to provide a smooth transition between the layup surface and the block and to prevent a buckling of the laminate layers.

According to one embodiment, the triangular cross-section comprises a slanted side. The plurality of laminate layers may form a stack, wherein, in step ii., the plurality of laminate layers is arranged such that an edge of the stack abuts the slanted side of the block of sacrificial material. This contributes to the above-mentioned functions and advantages, in particular to a manufacture of the half shell with a high precision.

According to one embodiment, the plurality of laminated layers is provided as a stack comprising at least one layer which is longer than the other layers. At the end of step ii., the layer which is longer than the other layers is bent around the block of sacrificial material. Thereby, the stack of laminated layers is fixed to the stack. A slipping of the stack of laminated layers can be prevented.

According to one embodiment, the at least one laminate layer of the plurality of laminate layers is fixed to the block of sacrificial material by an adhesive spray or by a double-sided adhesive tape in step ii. Thereby, the stack of laminated layers is fixed to the stack and a slipping of the stack of laminated layers can be prevented. Alternatively, the at least one laminate layer can be laid over the block of sacrificial material and be fixed by means of an adhesive spray or by a double-sided adhesive tape to an edge of the mould. In this case the block of sacrificial material supports to prevent the stack of laminated layers from slipping into the mould.

According to one embodiment, an inner edge of the block of sacrificial material which faces towards the layup surface is chamfered to match the contour of the mould. This contributes to the above-mentioned functions and advantages.

According to one embodiment, the method comprises the following step which is executed before step i.:
- applying a layer of peel ply at a bottom side of the block of sacrificial material. The peel ply layer can facilitate the removal of the block from the mould.

According to an embodiment, the protrusion defines a leading edge or a trailing edge of the half shell. The mould comprises a second protrusion which defines a respective other edge of the half shell. In step i., a second block of sacrificial material is arranged on the second protrusion of the mould. In step ii., at least one laminate layer of the plurality of laminate layers covers the second block of sacrificial material. In step iii., the second block of sacrificial material and the at least one laminate layer of the plurality of laminate layers are removed from the second protrusion. This contributes to the above-mentioned functions and advantages.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic view of a cross-section of a transition area of a half shell of a wind turbine rotor blade during its manufacture in a mould,
Figure 5 shows a schematic view of a cross-section of a rotor blade root area of a half shell of a wind turbine rotor blade during its manufacture in a mould,
Figure 6 shows a schematic top view of a root area part of a mould,
Figure 7 shows a detail of a cross-section of the root area part shown in Figure 6,
Figure 8 shows a schematic view of a cross-section of a rotor blade root area of a half shell of a wind turbine rotor blade during its manufacture in a mould according to another embodiment, and
Figure 9 shows a flow chart of a method of manufacturing the half shell.

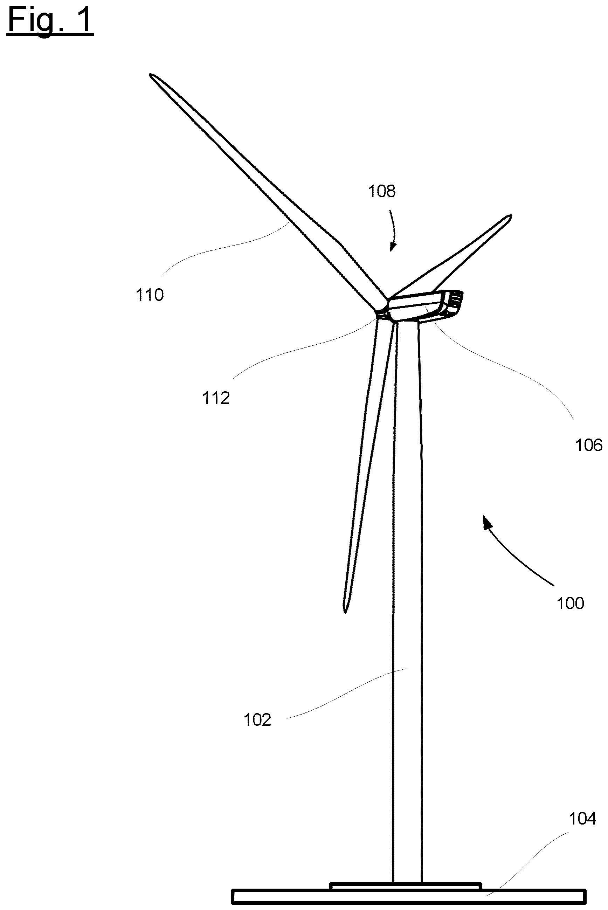

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

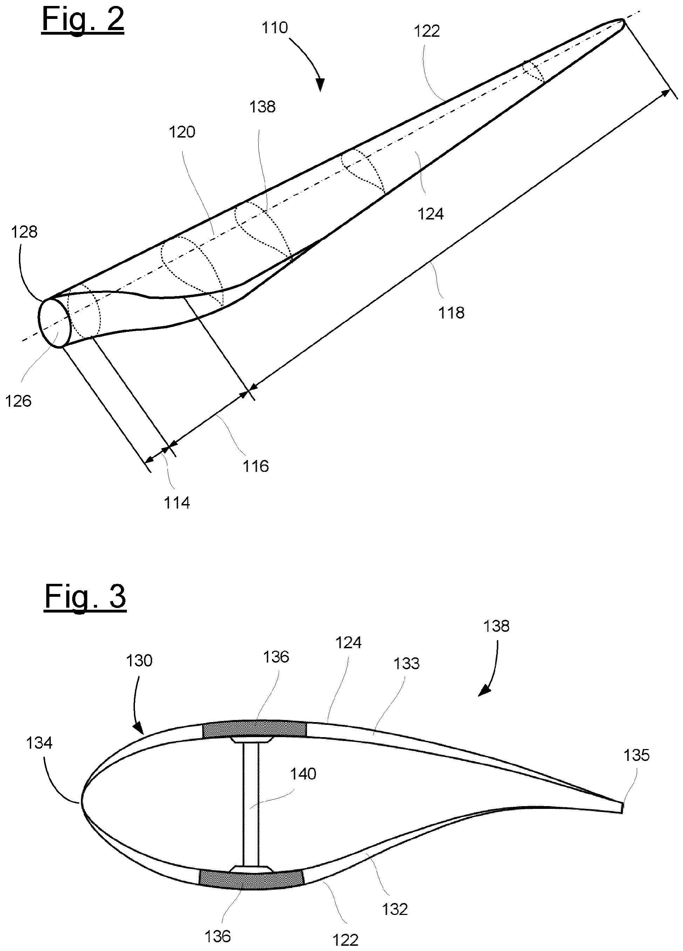

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross-section profile 138 (see Figure 2) of the wind turbine rotor blade 110 running traverse to the longitudinal direction 120. The rotor blade 110 has an aerodynamic shell 130 comprising two half shells, wherein a pressure side half shell 132 and a suction side half shell 133. The two half shells 132, 133 are firmly connected to each other along the longitudinal axis at opposite connecting surfaces located at the leading edge 134 and trailing edge 135.

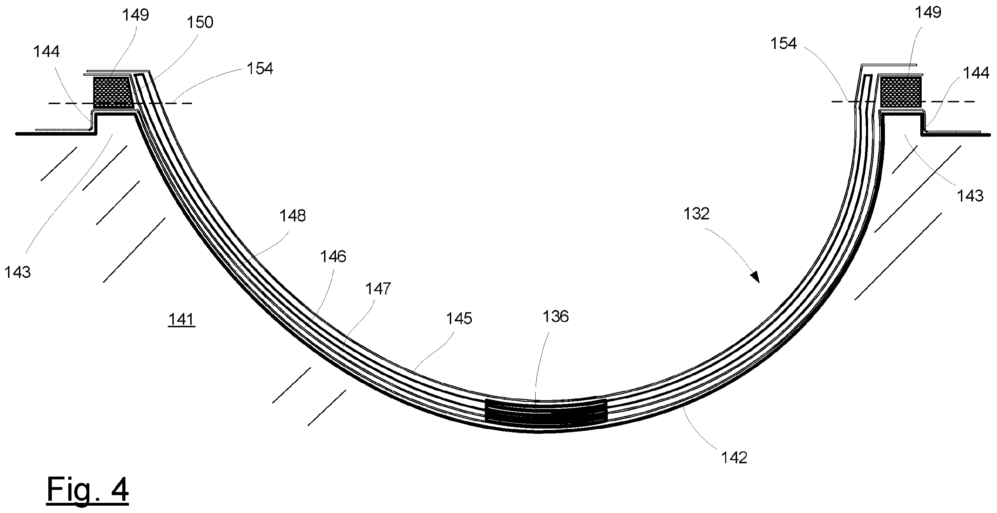

Each half shell 132, 133 comprises a shell-structure. The shell-structure comprises a plurality of laminate layers. The plurality of laminate layers comprises inner laminate layers 145 facing towards an inside of the half shell 132, outer laminate layers 146 facing towards an outside of the half shell 132. Additionally, a core material 147 is sandwiched between the inner laminate layers and the outer laminate layers (see Figure 4).

Each half shell 132, 133 has at least one spar cap 136 embedded in the shell-structure. A spar cap 136 can also be generally named "main laminate" and carries main loads during operation of the rotor blade 110. The rotor blade 110 further comprises at least one shear web 140 connecting the spar caps 136 within the rotor blade 110.

Figure 4 shows a half shell 132 of a wind turbine rotor blade 110 during its manufacturing. In Figure 4, a cross-sectional view of a mould 141 and a shell-structure of the half shell 132 is shown in the transition area 116 of the half shell.

For manufacturing the half shell 132 of the wind turbine rotor blade 110, a mould 141 is used which comprises a layup surface 142 and two protrusions 143 defining edges of the mould 141. One of the protrusions 143 defines an edge which corresponds to the trailing edge 135 of the half shell 132 and the other protrusion 143 defines an edge which corresponds to the leading edge 134 of the half shell 132. A step 144 is formed adjacent to each of the protrusions 143 in an outward direction away from the layup surface 142.

The laminate layers of the half shell 132 are subsequently arranged on the mould. An outer layer 148 of the half shell 132 is arranged directly on the layup surface 142 of the mould 141. The outer layer 148 protrudes over both protrusions 143 which define the edges of the mould 141. In the finished half shell 132, the outer layer 148 is the outermost layer of the half shell 132.

Subsequently, blocks 149 of sacrificial material are arranged on the protrusions 143. One block 149 is arranged on the protrusion 143 defining the trailing edge 135 and another block 149 is arranged on the protrusion 143 defining the leading edge 134. Each of the blocks 149 is arranged directly on the outer layer 148 which is arranged on the respective protrusion 143.

Each of the blocks 149 comprises an inner edge 150 which faces towards to layup surface 142, i.e., which faces towards the inside of the mould 141. The inner edges 150 of the blocks 149 are flush with the layup surface 142. The inner edges 150 of the block 149 of sacrificial material arranged at the trailing edge side is chamfered to match the contour of the mould 141. In the embodiment example shown in Figure 4, the block 150 of sacrificial material arranged on the trailing edge side has a trapezoidal cross-section and the block arranged on the leading edge side has a rectangular cross-section.

Each block 149 is fixed to the outer layer 148, e.g., by an adhesive spray or by a double-sided adhesive tape being applied between the outer layer 148 and the block 149. In an alternative embodiment example, the outer layer 148 may cover only the layup surface 142 and the outer layer 148 may not be arranged on the protrusion 143. In this embodiment example, the blocks 149 are fixed directly on the protrusions 143, e.g., by an adhesive spray or by a double-sided adhesive tape being applied between the protrusion 143 and the block 149.

The sacrificial material is a hardened foam material, for example polyvinylchloride (PVC) or polyethylene terephthalate (PET). The sacrificial material is a material which can be removed easily, for example by slicing or by breaking the material and by knocking it away.

The sacrificial material has a colour which differs from the colour of the mould 141 and from the colour of the laminate layers 145, 146. This allows a worker to easily recognize the sacrificial material. This gives a visual indication to the worker indicating a correct position of the slicing tool for a cut in a slicing operation to remove the block 149 of sacrificial material.

After applying the blocks 149 on the outer layer 148, laminate layers 145, 146, 147 are applied on the mould 141 which cover the outer layer 148 on the layup surface 142 and the blocks 149 of sacrificial material on the protrusions 143. The laminate layers include inner laminate layers 145 facing towards the inside of the half shell 132, outer laminate layers 146 facing towards the outside of the half shell 132 and a core material 147 sandwiched between the inner laminate layers 145 and the outer laminate layers 146. Additionally, a spar cap 136 is embedded in the shell-structure.

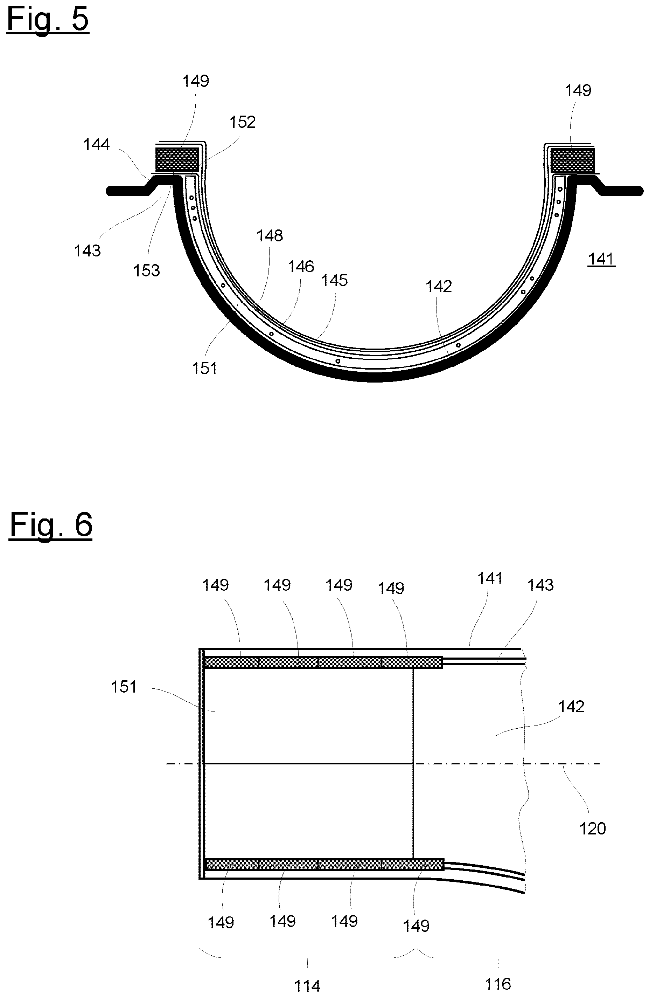

Figure 5 also shows the half shell 132 of a wind turbine rotor blade 110 during its manufacturing. In Figure 5, a cross-sectional view of the mould 141 and the shell-structure of the half shell 132 is shown in the rotor blade root area 114 of the half shell 132.

In the rotor blade root area 114, the half shell 132 comprises a root joint 151. The root joint 151 is a prefabricated part. The root joint 151 has a substantially semi-circular cross-section. The root joint 151 is configured to attach the rotor blade to the rotor hub 112.

In the rotor blade root area 114, the root joint 151 is arranged directly on the mould 141 and the outer layer 148 is arranged above the root joint 151. An end face 152 of the root joint 151 is flush with the protrusion 143. The outer layer 148 covers the end face 152 of the root joint 151 and the protrusion 143.

After arranging the root joint 151 and the outer layer 148 on the mould 141, the blocks 149 of sacrificial material are arranged on the protrusion 143. In the rotor blade root area 114, the blocks 149 protrude inwardly over the protrusions 143. The end face 152 of the root joint 151 abuts a lower face 153 of the block 149. The lower face 153 of the block 149 faces towards the protrusion 143 and protrudes over the protrusion 143. The lower face 153 of the block 149 overlaps with the root joint 151. In the rotor blade root area 114, the inner edges 150 of the blocks 149 are flush with the root joint 151.

Additionally, in the root area 114, laminate layers 145, 146, 147 are applied on the mould 141 which cover the outer layer 148 on the layup surface 142 and the blocks 149 of sacrificial material on the protrusions 143 as also described with respect to Figure 4. The laminate layers include the inner laminate layer 145 facing towards the inside of the half shell 132 and the outer laminate layer 146 facing towards the outside of the half shell 132. Further laminate layers can be arranged between the inner laminate layer 145 and the outer laminate layer 146.

After the structure as shown in Figures 4 and 5 has been assembled on the mould 141, the blocks 149 of sacrificial material and the parts of the laminate layers 145, 146 covering the blocks 149 are removed. A cut is made into the laminate layer structure and the block 149. In Figure 4, the line 154 along which the cut is made is indicated. The cut is made as close as possible to the protrusions 143 of the mould 141 to remove as much as possible from the block 149 of sacrificial material and the laminate layers. The cut is made by a slicer.

By providing the block 149 of sacrificial material, the cut can be made in a plane parallel to the upper surface of the protrusion 143 and very close to the protrusion 143. It may even be possible to remove the block 149 of sacrificial material completely in the slicing operation. As the different colour of the block 149 provides a visual indication for making the cut, the risk of accidently damaging the mould 141 or the root joint 151 during the slicing operation can be minimized and the slicing can be made very close to the protrusion 143.

If it is not possible to remove the entire block 149 of sacrificial material during the slicing operation, slicing can be followed by an additional grinding step. As most of the blocks 149 is removed during slicing, the process time for grinding can be minimized. Multiple advantages are provided by using a slicing operation rather than a grinding operation to remove most of the blocks 149 or even to remove the blocks 149 entirely:
Compared to grinding, slicing can be made faster, thereby reducing the overall process time for manufacturing the half shell 132.

During grinding, a large amount of dust is formed which results in unpleasant working conditions for the manufacturer and which may even cause a health risk for the manufacturer unless corresponding precautionary measures, such as respiratory protection, are provided. Using slicing instead of grinding can reduce the formation of dust.

Moreover, compared to a grinding operation, slicing can achieve a smoother surface finish which requires less or even no additional surface trimming afterwards. Compared to grinding, slicing generates less heat, thereby reducing the risk of thermal damage of the half shell 132. Slicing also puts less mechanical stress on the half shell 132 compared to grinding, thereby helping to maintain the structural integrity of the half shell 132.

After removing the block 149 of sacrificial material and the parts of the laminate layers 145, 146 on the block 149, the finished half shell 132 is removed from the mould 141. The half shell 132 can be used as a suction side half shell or a pressure side half shell, e.g., in a wind turbine rotor blade 110 as shown in Figures 2 and 3.

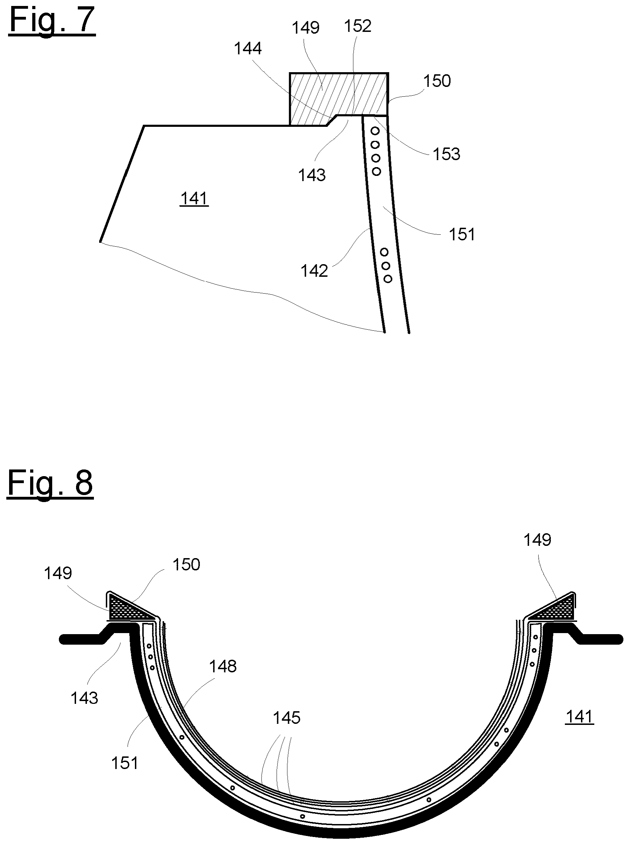

Figures 6 and 7 show the half shell 132 during its manufacture in the mould 141 according to another embodiment.

Figure 6 shows a top view of the mould 141 showing the rotor blade root area 114 and parts of the transition area 116.

Figure 7 shows a detail of a cross-section of the root area part shown in Figure 6.

Figure 6 shows the half shell 132 during its manufacture in the mould 141. Along each of the protrusions 143 of the mould 141, four blocks 149 are provided. The first block 149 on each of the protrusions 143 abuts a root end of the mould 141 and the subsequent other blocks 149 follow in the longitudinal direction 120. The blocks 149 cover the protrusion 143 in the rotor blade root area 114 completely and the last block 149 in the longitudinal direction 120 overlaps into the transition area 116.

In Figure 6, the half shell 132 is shown in a manufacturing step, wherein only the root joint 151 and the blocks 149 have been placed in the mould 141. The laminate layers 145-148 are not shown in Figures 6 and 7.

As can be seen in Figure 7, the block 149 has a cross-sectional shape which is adapted to the shape of the mould 141. The lower face 153 of the block 149 abuts the protrusion 143 and the step 144 of the mould 141. The lower face 153 of the block 149 has a shape which is complementary to the shape of the protrusion 143 and the step 144. The block 149 protrudes over the protrusion 143 in the inward direction. The block 149 abuts an end face 152 of the root joint 151 which is arranged on the layup surface 142.

The embodiment example shown in figure 7 differs from the previous embodiment example on that the blocks 149 are arranged on the protrusion 143 and on the step 144 of the mould 141.

Figure 8 shows another embodiment example of the blocks 149 according to the invention. The blocks 149 of sacrificial material have a triangular cross-section. Each of the blocks 149 comprises a slanted inner edge 150 which faces towards the layup surface 142. The plurality of laminate layers including the inner laminate layers 145 and the outer laminate 146 layers form a stack. The plurality of laminate layers is arranged such that an edge of the stack abuts the slanted inner edge 150 of the block 149.

One or more layers of the laminate layers are longer than other layers of the stack. The longer layers 146 is bent around the block 149 of sacrificial material and, thereby, additionally fixing the stack of laminate layers to the block 149. By folding the laminate layer 146 over the block 149, slippage of the laminate layers can be avoided, i.e., the laminate layers 145, 146 can be prevented from sliding towards the inside of the layup surface 142. Additionally or alternatively to folding layers around the block 149, the laminate layer 145 which is arranged on the block 149 can be fixed to the block 149, e.g., by an adhesive spray or by a double-sided adhesive tape.

The stack of laminate layers can be sewn together. This can prevent any movement of the layers 145, 146 relative to each other.

Figure 8 shows blocks 149 with a triangular cross-section in the rotor blade root area 114. The blocks 149 with a triangular cross-section can also be arranged on the protrusion 143 of the mould 141 in the transition area 116 and/or in the profile area 118.

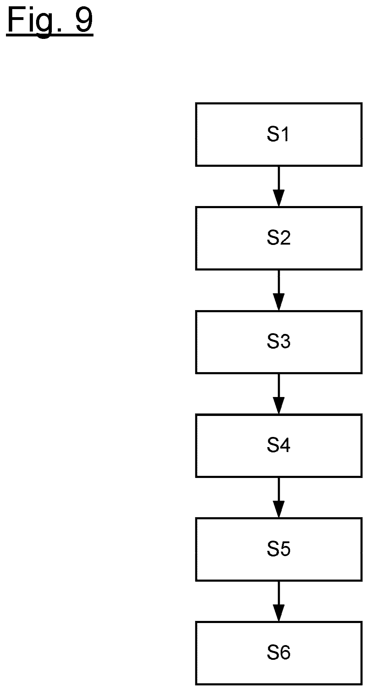

Figure 9 shows a flowchart of a method for manufacturing a half shell 132. A mould 141 is provided which comprises a layup surface 142 and two protrusions 143 defining the edges of the mould 142.

In a first step S1, a peel ply layer is arranged on the mould 141 and on the protrusions 143. The peel ply layer is not shown in Figures 4 to 8 to simplify the illustration.

In a second step S2, an outer layer 148 of the half shell 132 is arranged in the mould 141. The outer layer 148 is arranged on the layup surface 142 and on the protrusions 143 of the mould 141. The outer layer 148 protrudes beyond the protrusions 143.

In a third step S3, a peel ply layer and one or more blocks 149 of sacrificial material are arranged on the protrusion 143. The blocks 149 of sacrificial material can be arranged either directly on the protrusion 143 or on the part of the outer layer 148 which is arranged on the protrusion 143. The block 149 of sacrificial material is fixed either to the outer layer 148 or to the protrusion 143, for example, by an adhesive spray or by a double-side adhesive tape.

In a fourth step S4, a plurality of laminate layers 145-147 is arranged on the layup surface 142. The plurality of laminate layers includes inner laminate layers 145, outer laminate layers 146 and a core material 147 sandwiched between the inner and the outer laminate layers 145, 146.

At least one laminate layer 145, 146 of the plurality of laminate layers covers the block 149 of sacrificial material on the protrusion 143. The at least one laminate layer 145, 146 covering the block 149 can be fixed to the block 149. The layer can be fixed by an adhesive spray or by a double-sided adhesive tape. Alternatively, the at least one laminate layer 145, 146 may protrude so far beyond the block 149 that it is bent around the block 149 and, thereby, fixed to the block 149 or alternatively, to the mould. In the fourth step S4, a spar cap 136 can also be arranged on the layup surface 142.

In a fifth step S5, the elements arranged on the mould 141 are infused with a resin. For example, the outer layer 148, the block 149 of sacrificial material and the plurality of laminate layers 145, 146 and the spar cap 136 can be infused with the resin. Before the resin infusion, a vacuum foil is applied which covers the block 149 of sacrificial material and the plurality of laminate layers 145, 146 during resin infusion and which is removed after the resin infusion.

In a sixth step S6, the block 149 of sacrificial material and the part of the at least one laminate layer 145, 146 covering the block 149 are removed. The block 149 and the part of the at least one laminate layer 145, 146 are removed by slicing, possibly followed by grinding. Alternatively, the block 149 and the at least one laminate layer 145, 146 may be removed by breaking and knocking off the block 149.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade root end
- 128: flange connection
- 130: shell
- 132: pressure side half shell
- 133: suction side half shell
- 134: leading edge
- 135: trailing edge
- 136: spar cap
- 138: cross-section profile
- 140: shear web
- 141: mould
- 142: layup surface
- 143: protrusion
- 144: step
- 145: inner laminate layer
- 146: outer laminate layer
- 147: core material
- 148: outer layer
- 149: block of sacrificial material
- 150: inner edge of a block
- 151: root joint
- 152: end face of root joint
- 153: lower face of a block
- 154: cutting line

## Claims

1. Method of manufacturing a half shell (132) of a wind turbine rotor blade,
using a mould (141) which comprises a layup surface (142) and a protrusion (143), wherein the protrusion (143) defines an edge of the mould (141),
comprising the steps of:
i. arranging a block (149) of sacrificial material on the protrusion (143),
ii. arranging a plurality of laminate layers (145, 146, 147) on the layup surface (142), wherein at least one laminate layer (145, 146) of the plurality of laminate layers (145, 146, 147) covers the block (149) of sacrificial material on the protrusion (143),
iii. removing the block (149) of sacrificial material and the part of the at least one laminate layer (145, 146) covering the block (149) of sacrificial material.

2. Method according to claim 1,
wherein the method comprises the following step which is executed before step i.:
- arranging an outer layer (148) of the half shell (132) in the mould (141), wherein the outer layer (148) is arranged on the layup surface (142) and the protrusion (143), wherein the outer layer (148) protrudes beyond the protrusion (143), and wherein the block (149) of sacrificial material is arranged in step i. such that the outer layer (148) is arranged between the protrusion (143) and the block (149) of sacrificial material.

3. Method according to claim 2,
wherein the block (149) of sacrificial material is fixed to the protrusion (143) and/or the outer layer (148) of the half shell (132) by an adhesive spray or by a double-sided adhesive tape in step i.

4. Method according to any one of claims 2 to 3,
wherein the method comprises the following step which is executed after step ii. and before step iii.:
- infusing the outer layer (148), the block (149) of sacrificial material and the plurality of laminate layers (145, 146, 147) with a resin.

5. Method according to any one of the preceding claims, wherein, in step iii., the block (149) of sacrificial material and the at least one laminate layer (145, 146) of the plurality of laminate layers (145, 146, 147) are removed by slicing.

6. Method according to any one of the preceding claims, wherein the sacrificial material is a hardened foam material.

7. Method according to any one of the preceding claims, wherein the block (149) of sacrificial material has a colour which differs from the colour of the mould (141) and from the colour of the plurality of laminate layers (145, 146, 147).

8. Method according to any one of the preceding claims, wherein the half shell (132) extends in a longitudinal direction (120) from a root end (126) to a tip end, wherein, in step i., the block (149) of sacrificial material is arranged on the protrusion (143) at the root end (126) and extends along the protrusion (143) in the longitudinal direction (120) such that it covers at least a part of the protrusion (143).

9. Method according to any one of the preceding claims, wherein the block (149) of sacrificial material has a cross-section having a triangular or trapezoidal, in particular rectangular, or rounded shape.

10. Method according to claim 9,
wherein the triangular cross-section comprises a slanted side (150),
wherein the plurality of laminate layers (145, 146, 147) forms a stack,
wherein, in step ii., the plurality of laminate layers (145, 146, 147) is arranged such that an edge of the stack abuts the slanted side (150) of the block (149) of sacrificial material.

11. Method according to any one of the preceding claims,
wherein the plurality of laminated layers (145, 146, 147) is provided as a stack comprising at least one layer (145, 146) which is longer than the other layers,
wherein, at the end of step ii., the layer (145, 146) which is longer than the other layers is bent around the block (149) of sacrificial material.

12. Method according to any one of the preceding claims, wherein the at least one laminate layer (145, 146) of the plurality of laminate layers (145, 146, 147) is fixed to the block (149) of sacrificial material by an adhesive spray or by a double-sided adhesive tape in step ii.

13. Method according to any one of the preceding claims,
wherein an inner edge (150) of the block (149) of sacrificial material which faces towards the layup surface (142) is chamfered to match the contour of the mould (141).

14. Method according to preceding claim,
wherein the method comprises the following step which is executed before step i.:
- applying a layer of peel ply at a bottom side of the block (149) of sacrificial material.

15. Method according to any one of the preceding claims, wherein the protrusion (143) defines a leading edge or a trailing edge of the half shell (132), and
wherein the mould (141) comprises a second protrusion (143) which defines a respective other edge of the mould (141), wherein, in step i., a second block (149) of sacrificial material is arranged on the second protrusion (143) of the mould (141),
wherein, in step ii., at least one laminate layer (145, 146) of the plurality of laminate layers (145, 146, 147) covers the second block (149) of sacrificial material,
wherein, in step iii., the second block (149) of sacrificial material and the at least one laminate layer (145, 146) of the plurality of laminate layers (145, 146, 147) is removed from the second protrusion (143).
